# EUROPEAN PATENT APPLICATION

(11) **EP 0 560 020 A2**
(43) Date of publication of application: **15.09.1993**
(21) Application number: 93100659.7
(22) Date of filing: 18.01.1993
(51) Int. Cl.: G06F 9/38

(54) **Digital signal processing function appearing as hardware FIFO**

(30) Priority: 13.03.1992 US 850541
(71) Applicant: INTERNATIONAL BUSINESS MACHINES CORPORATION, Armonk, N.Y. 10504 (US)
(72) Inventor: Weingart, Steve Harris, Boca Raton, Florida 33486 (US)
(74) Representative: Jost, Ottokarl, Dipl.-Ing.

(57) **Abstract**

A means of making a digital signal processing function perform independently of the system processor and appear as a hardware FIFO. The architecture of the present invention comprises a digital signal processing means connected between the data output of a first FIFO buffer and the data input of a second FIFO buffer, a control means for controlling the digital signal processing means as a function of the presence and absence of data in the first FIFO buffer and said second FIFO buffer and control signals received from a source of control signals. Data throughput is performed asynchronously and independently of the system environment and comprises the following steps: receiving data on the data input of the first FIFO buffer, transferring that data to the digital signal processor, processing the data, then transferring the processed data to the second FIFO buffer to be output when the data receiver is ready to accept to data.

## Description

This invention relates generally to data flow through a computing system. More specifically, the invention relates to a means of making a digital signal processing function perform independently of the system processor.

Real-time computational systems dedicate a percentage of processing time to managing data flow through the system and between various subprocessors. The processing time which is dedicated to this function becomes substantial when the computational system has high speed real-time data arriving continuously and asynchronously. Data flow synchronization and throughput speed can also be impeded if the system processor has to handle the data directly.

When these computational systems have processing power which is decentralized and distributed over the processing path, performance is limited by the slowest part of the data path. The high performance of some components or subsystems may be lost due to the low performance of others. In these cases, throughput suffers when the computational results are interdependent, rather than independent among the subprocessors.

These performance problems are compounded when a subsystem function is performed in hardware. These hardware-based functions process data considerably faster that the system processor, resulting in a greater demand being placed on the system processor to manage the data throughput to satisfy the subprocessor's needs.

Computing systems which have high speed real-time data arriving continuously and asynchronously have implemented various techniques to synchronize to the incoming data. For example, interrupts or similar schema are commonly used to respond only when data is available. Utilization of interrupts requires additional hardware to save the full state of the processor, including the indication of the offending event, and the instructions which have to be executed after the interrupt is serviced. This tends to be inefficient, using a significant portion of the processing time to manage the data flow.

Another common solution to handling the asynchronous data flow has been to use First In First Out (FIFO) buffers to synchronize the data input or output to a processor. The FIFO will function as a temporary storage area, holding the incoming data until the processor is ready to receive it, and holding the processed output data until the receiving device is ready to receive it. With the FIFO buffers alone, the performance and speed of the signal processor will continue to have system dependencies due to the system processor having to control the data transfers between other subsystems and the digital signal processor. What is needed is a system architecture which allows sub-processing functions to be performed without the burden of being dependent upon the system environment and relieves the system processor from having to perform the function of controlling the data flow to/from the sub-processor.

The present invention is directed towards a data throughput scheme, and more particularly, to a means of making a digital signal processing function perform independently of the system processor.

The data throughput scheme comprises two first-in-first-out (FIFO) buffers, each having a data input and data output, a digital signal processing means connected between the data output of the first FIFO buffer and the data input of the second FIFO buffer, and a control means for controlling the digital signal processing means as a function of the presence and absence of data in the first and second FIFO buffers.

Both FIFO buffers are comprised of a storage area referred to as a buffer, a buffer full indicator output for indicating a FIFO buffer full condition, a buffer write input for enabling the FIFO buffer to receive input data at data input, a buffer empty indicator output for indicating a FIFO buffer empty condition, and a buffer read input for enabling the FIFO buffer to output data at data output.

The control means comprises an input coupled to the buffer empty indicator output of the first FIFO buffer and an input coupled to the buffer full indicator output of the second FIFO buffer. The control means also comprises an output coupled to the buffer read input of the first FIFO buffer and an output coupled to the buffer write input of the second FIFO buffer. The controlling means controls the output of data from the first FIFO buffer to the digital signal processor and the output of data from the digital signal processor to the second FIFO buffer as a function of control signals received from a source of control signals.

The digital signal processor is comprised of a data input coupled to the data output of the first FIFO buffer and a data output coupled to the data input of the second FIFO buffer. The digital signal processor also has a control signal input coupled to an output of the control means for receiving control signals. The digital signal processor processes data output from the first FIFO buffer as a function of control signals received from the control means.

Data transfer through the system is achieved under the control of the controlling means as a function of control signals received from a source of control signals. Data throughput is performed asynchronously and independently of the system environment and comprises the following steps:
receiving data on the data input of the first FIFO buffer, transferring that data to the digital signal processor, processing the data, then transferring the processed data to the second FIFO buffer to be output when the data receiver is ready to accept the data.

An advantage of the present invention is the capability to perform a digital signal processing function independently of the system processor environment in which it lies. This relieves the system of the data throughput problems typical of systems which contain multiple processing functions.

It is a further advantage of the present invention to reduce the system processor's responsibility for managing data flow. This substantially increases the amount of processing time available for other functions.

It is a further advantage to alleviate any potential synchronization problems between the incoming data transfers, signal processing, and output data transfers.

### BRIEF DESCRIPTION OF THE DRAWINGS

FIGURE 1 is a diagram of a typical First In First Out (FIFO) buffer;
FIGURE 2 is a block diagram illustrating the use of FIFO buffers in an asynchronous computing machine;
FIGURE 3 is a high-level block diagram of the present invention;
FIGURE 4 is a block diagram of a FIFO with an embedded processing function;
FIGURE 5 is a high-level block diagram of a Citadel 386SX co-processor; and
FIGURE 6 is a block diagram of the cryptographic facility of the Citadel processor utilizing the architecture of the present invention.

The preferred embodiment of the present invention is now described with reference to the figures, where like reference numbers indicate like elements.

In the present invention an architecture is shown which enables a digital signal processing function to operate asynchronously and independently of the system processor, thereby appearing as a hardware FIFO containing an embedded transfer function.

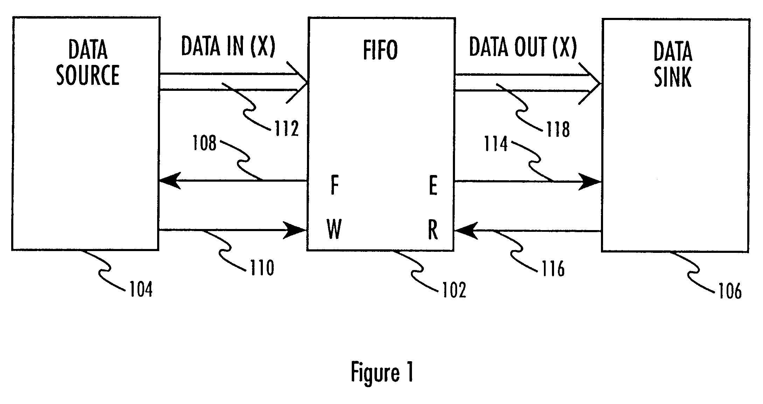

A First In First Out (FIFO) buffer is illustrated in FIGURE 1. When a data source 104 has data available for a data sink 106, it places the data in a FIFO 102 by presenting the data on a data input line 112 and activating a buffer Write signal on line 110. FIFO 102 then receives and stores the data. When data is available to be output from FIFO 102, the data sink 106 will be notified by the absence of a buffer Empty signal on line 114. Whenever FIFO buffer 102 is not empty, the data sink can transfer data from FIFO buffer 102 by activating the buffer Read signal on line 116. If data sink 106 is unable to remove data at a rate greater or equal to the rate at which data source 104 is outputting it, the FIFO buffer 102 will continue to be filled with data until it is full. When this occurs, data source 104 will be presented with a buffer Full signal on line 108. FIFO buffer architecture is not limited to that shown here. Other configurations include control signals such as a half-full signal, indicating to data sink 106 when the FIFO buffer is 50 percent full.

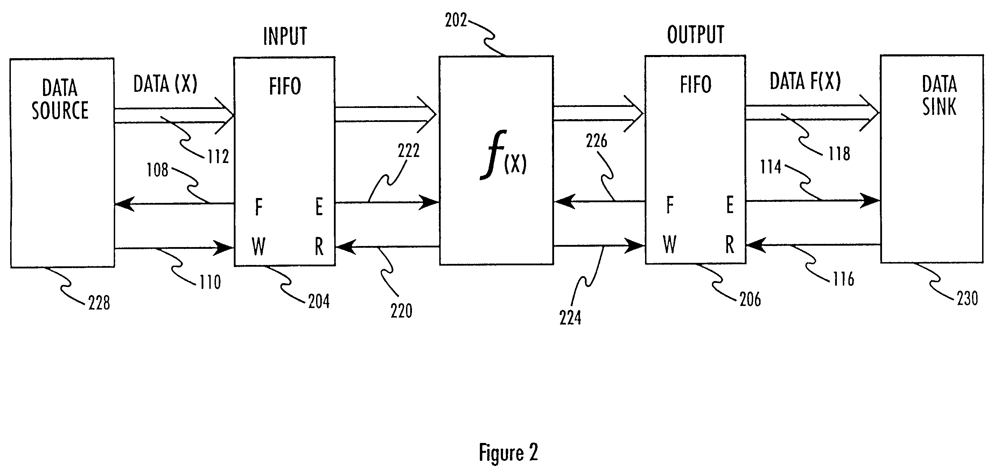

FIGURE 2 illustrates a digital signal processor (DSP) utilizing FIFO buffers to handle data throughput. The digital signal processor 202 receives data from data source 228 through input FIFO buffer 204. It then processes the data and outputs it in modified form for data sink 230 through output FIFO buffer 206. Input and output FIFO buffer 204 and 206 function as described above to synchronize data flow between DSP 202 and other subsystems.

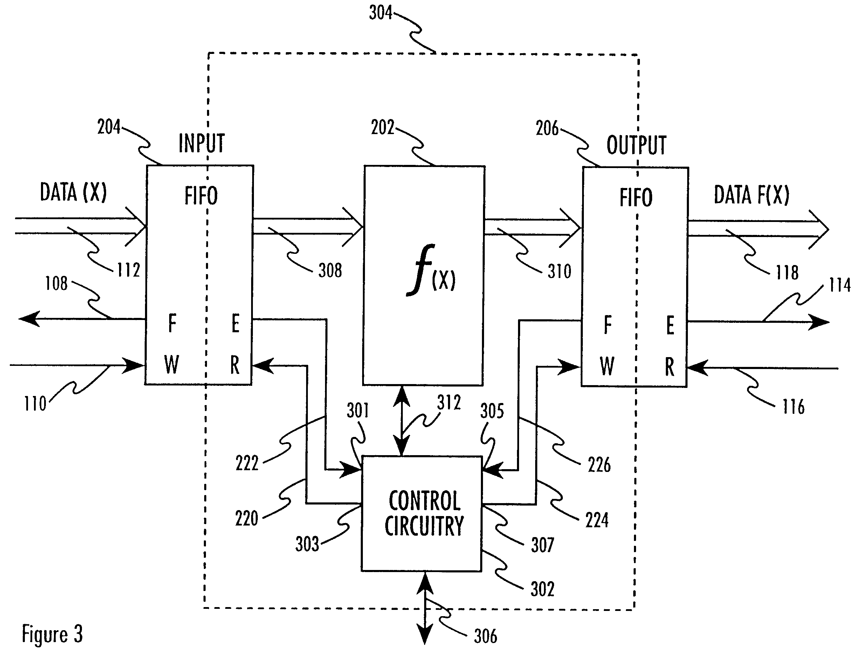

A block diagram of the present invention is illustrated in FIGURE 3. A control circuit 302 is placed between input FIFO buffer 204 and output FIFO buffer 206 along with the digital signal processor (DSP) 202.

Control circuit 302 is comprised of an input 301 and an output 303 coupled to input FIFO buffer 204. The input 301 is coupled to the buffer Empty output of FIFO buffer 204 by line 222. Input 301 receives the buffer Empty signal from the input FIFO buffer 204. The output 303 is coupled to buffer Read input of FIFO buffer 204 by line 220. Output 303 enables the FIFO buffer 204 to output data on data line 308 to DSP 202.

Control circuit 302 is also comprised of an input 305 and an output 307 coupled to output FIFO buffer 206. The input 305 is coupled to buffer Full output of FIFO buffer 206 by line 226. Input 305 receives the buffer Full signal from the FIFO buffer 206. The control circuit output 307 is coupled to the Write input of FIFO buffer 206 by line 224. Output 307 enables the FIFO buffer 206 to receive data on data line 310 from DSP 202.

Control circuit 302 is also coupled to DSP 202 by line 312 and to a source of control signals by line 306.

Data is input to FIFO buffer 204 on data line 112 from a source of data. The source of data enables the FIFO buffer 204 to receive data by sending a buffer Write signal on line 110. The FIFO buffer 204 then receives the data on data line 112 and notifies control circuit 302 that it has data by removing the buffer Empty signal on line 222. Control circuit 302 determines if data should be sent to DSP 202 over data line 308 as a function of control signals received from a source of control signals and the status of DSP 202. When the DSP is ready to receive the data, control circuit 302 enables the FIFO buffer 204 by sending it a buffer Read signal on line 220. If the FIFO buffer 204 completely fills with data, it will then notify the source of data by sending a buffer Full signal on line 108.

Control circuit 302 controls the output of data from the FIFO buffer 204 to the DSP 202 as a function of the buffer Empty signal received from FIFO 204 on line 222 and the control signals received from a source of control signals on line 306. Control circuit 302 may then control the processing of data by DSP 202 by transmitting and receiving control and status information over line 312. Control circuit 302 then controls the output of data from DSP 202 to the output FIFO buffer 206 as a function of the buffer Full signal received from FIFO 206 on line 226 and the control signals received from a source of control signals on line 306.

When DSP 302 has processed data available for FIFO 206, control circuit 302 enables FIFO 206 to receive the data by sending a buffer Write signal on line 224. The FIFO buffer 206 then receives and stores the processed data. Output FIFO buffer 206 notifies the receiver of data that data is available by removing the buffer Empty signal on line 114. When the receiver of data is ready to receive the processed data, it enables the output FIFO buffer 206 by sending it a buffer Read signal on line 116. The FIFO buffer 206 then outputs the processed data on data line 118. If the output FIFO buffer 206 completely fills with data, then it will notify control circuit 302 by sending a buffer Full signal on line 226.

Control circuit 302 transmits and receives data with a source of control signals on line 306. Minimally, the only control function that control circuit 302 may require is a control signal indicating when a system reset is to occur. More typically, however, control signals to control circuit 302 include initialization and enabling signals as well. Once control circuit 302 has been enabled, it will control the functioning of DSP 302 without requiring further communication with the source of control signals.

This asynchronous operation allows the digital signal processing function to process data at its maximum rate until either there is no data remaining in FIFO buffer 204 or there is no room in output FIFO buffer 206 to store the processed data.

The control circuit 302 can take any form necessary to manage the data throughput. In the preferred embodiment, control circuit 302 is of the form of a finite state machine. However, it will be understood by those skilled in the art that the controlling means can take on various forms without departing from the spirit and scope of the invention.

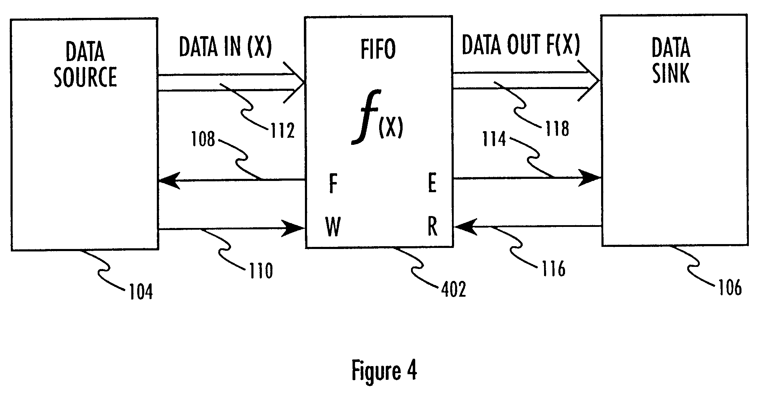

Those elements of the present invention which are transparent to the system environment are included in the area bounded by dashed line 304. This includes DSP 202, control circuit 302, the output side of input FIFO buffer 204 and the input side of output FIFO buffer 206. These elements are transparent in that there is no direct access to them from the system environment. The functions, therefore, appear as a single FIFO buffer with an embedded digital signal processor as illustrated in FIGURE 4. FIFO buffer 402 interfaces with data source 104. This interface includes data input line 112 and the buffer Full and buffer Write control lines 108 and 110, respectively. The FIFO buffer 402 interface with data sink 106 includes data output line 118 and buffer Empty and buffer Write control lines, 114 and 116, respectively. This is identical in function and appearance to the interfaces shown in FIGURE 3. From the system standpoint, the signal processing function in compressed into a single FIFO function.

It will be understood by those skilled in the art that the digital signal processing means can take on various forms without departing from the spirit and scope of the invention. Many applications which have the common problem of managing a continuous stream of real-time data can benefit from the present invention. Examples of these applications are audio and video signal processing, data compression, data encoding and decoding, data translation or substitution, and instrumentation and sensing signal processing.

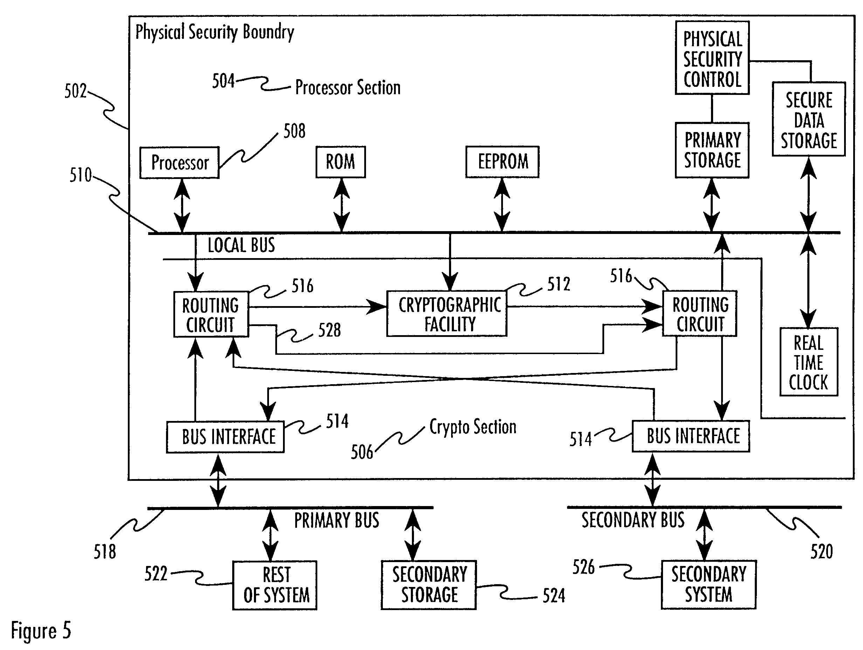

An example of the present invention utilized in a cryptographic system is shown in FIGURE 5. The cryptographic secure processor is a co-processor which performs cryptographic functions for a host processor. The cryptographic co-processor 502 is functionally separated into two sections: a processor section 504 and crypto section 506. These two sections are combined into a single physically secure package.

The processor section 504 contains the system processor, memory and other associated components. For the present discussion, only processor 508 and local bus 510 are relevant. The processor 508 is an Intel 386SX microprocessor which controls the system environment, including data transfer to/from the crypto section 506.

The crypto section 506 contains bus interface components 514, routing circuits 516, and cryptographic facility 512. The cryptographic co-processor 502 interfaces with its environment via primary bus 518 and the secondary bus 520. In FIGURE 5, the components with which the cryptographic co-processor 502 interfaces are: a secondary system 526, a secondary storage location 524, and the rest of the system 522. The rest of the system 522 illustrates the larger system environment within which the cryptographic co-processor 502 lies.

Routing circuits 516 are employed to enable cryptographic facility 512 to receive or transmit data over either of the three buses (510, 518, or 520) with which it interfaces, with any buses acting as the data source and data destination. For example, data can be encrypted or decrypted from primary bus 518 to the secondary bus 520, from the primary bus 518 to itself, from the cryptographic local bus 510 to the primary bus 518, etc. The routing circuits 516 are connected to each other via data path 528 to enable data to be passed through the system without being processed by cryptographic facility 512.

Bus interfaces 514 are the communication ports with which the cryptographic co-processor interfaces with the primary bus 518 and secondary bus 520.

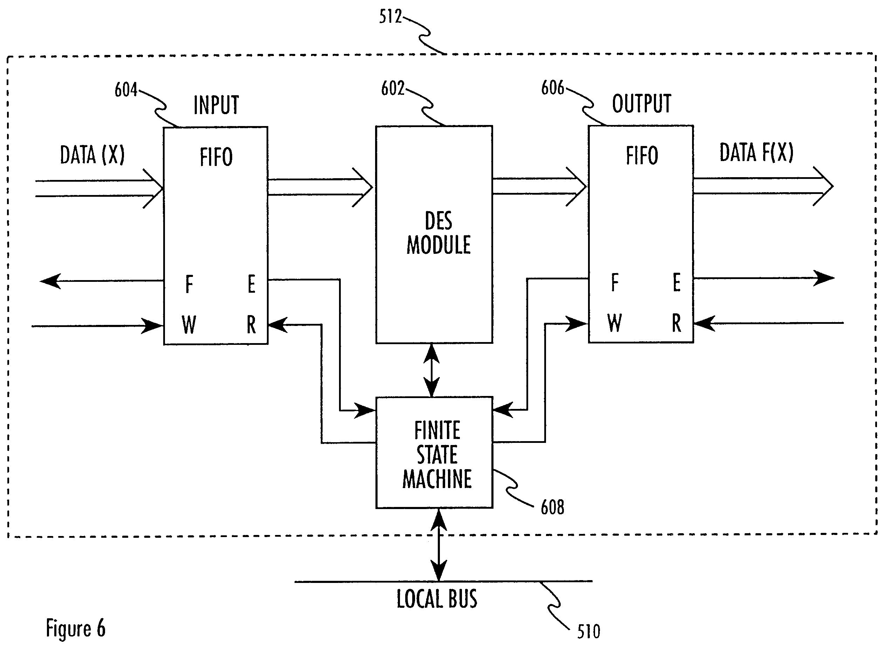

The cryptographic facility 512 utilizes the preferred embodiment of the present invention. FIGURE 6 is a block diagram of cryptographic facility 512. Cryptographic facility 512 contains data encryption system (DES) module 602, input FIFO 604, output FIFO 606, and finite state machine 608. DES module 602 performs the data encryption/decryption processing functions of the cryptographic co-processor 502. The input and output FIFOs 604 and 606 perform the same functions as FIFOs 204 and 206 of FIGURE 3. Finite state machine 608 performs the control functions for the cryptographic facility 512 performing the same function as control 302 of FIGURE 3.

In operation, the processor 508 determines which of the three buses will be the source and which will be the destination for cryptographic facility 512. Once it makes this determination, it initializes the finite state machine 608 with this information, and then enables finite state machine 608 via local bus 510 when it is ready. At that point, cryptography is performed according to the initialization instructions until processing is complete. This configuration allows the cryptographic section 506 to perform its processing and communications functions, independent of processor 508, at maximum speed whenever data is available. As a result, cryptographic facility 512 then appears as a FIFO with an embedded cryptographic function. This function is performed asynchronously and independently, requiring only initialization instructions and an enabling command from processor 508. This removes the burden of managing the data flow from the cryptographic facility 512, allowing processor 508 to dedicate more processing time to other functions.

## Claims

1. A processing system, comprising:
a first first-in-first-out (FIFO) buffer having a first storage area, a first data input and a first data output;
a second FIFO buffer having a second storage area, a second data input and a second data output;
digital signal processing means connected between said first data output of said first FIFO buffer and said second data input of said second FIFO buffer; and
control means for controlling said digital signal processing means as a function of the presence and absence of data in said first storage area of first FIFO buffer and said second storage area of second FIFO buffer.

2. The processing system of claim 1, wherein said first FIFO buffer further comprises:
a first buffer full indicator output for indicating a first FIFO buffer full condition; and
a first buffer write input for enabling said first FIFO buffer to receive input data at said first data input.

3. The processing system of claim 2, wherein said first FIFO buffer further comprises:
a first buffer empty indicator output for indicating a first FIFO buffer empty condition; and
a first buffer read input for enabling said first FIFO buffer to output data at said first data output.

4. The processing system of claim 3, wherein said control means further comprises:
an input coupled to said first buffer empty indicator output of said first FIFO buffer;
an output coupled to said first buffer read input of said first FIFO buffer; and
means for controlling the output of data from said first FIFO buffer to said digital signal processing means as a function of control signals received from a source of control signals.

5. The processing system of claim 4, wherein said digital signal processing means comprises:
a third data input coupled to said first data output of said first FIFO buffer;
a third data output coupled to said second data input of said second FIFO buffer;
a control signal input coupled to an output of said control means for receiving control signals from said control means; and
means for processing data output from said first FIFO buffer as a function of control signals received from said control means.

6. The processing system of claim 5, wherein said second FIFO buffer further comprises:
a second buffer empty indicator output for indicating a second FIFO buffer empty condition; and
a second buffer read input for enabling said second FIFO buffer to output data at said second data output.

7. The processing system of claim 6, wherein said second FIFO buffer further comprises:
a second buffer full indicator output for indicating a second FIFO buffer full condition; and
a second buffer write input for enabling said second FIFO buffer to receive input data at said second data input.

8. The processing system of claim 7, wherein said control means further comprises:
an input coupled to said second buffer full indicator output of said second FIFO buffer;
an output coupled to said second buffer write input of said second FIFO buffer; and
means for controlling the output of data from said digital signal processing means to said second FIFO buffer as a function of control signals received from a source of control signals.

9. The processing system of claim 8, wherein said control means comprises a finite state machine.

10. The processing system of claim 1, wherein said second FIFO buffer further comprises:
a second buffer empty indicator output for indicating a second FIFO buffer empty condition; and
a second buffer read input for enabling said second FIFO buffer to output data at said second data output.

11. The processing system of claim 10, wherein said second FIFO buffer further comprises:
a second buffer full indicator output for indicating a second FIFO buffer full condition; and
a second buffer write input for enabling said second FIFO buffer to receive input data at said second data input.

12. The processing system of claim 11, wherein said control means further comprises:
an input coupled to said second buffer full indicator output of said second FIFO buffer;
an output coupled to said second buffer write input of said second FIFO buffer; and
means for controlling the output of data from said digital signal processing means to said second FIFO buffer as a function of control signals received from a source of control signals.

13. The processing system of claim 1, wherein said digital signal processing means comprises:
a third data input coupled to said first data output of said first FIFO buffer;
a third data output coupled to said second data input of said second FIFO buffer;
a control signal input coupled to an output of said control means for receiving control signals from said control means; and
means for processing data output from said first FIFO buffer as a function of control signals received from said control means.

14. The processing system of claim 13, wherein said digital signal processing means comprises a data encoding and/or decoding means.

15. The processing system of claim 13, wherein said digital signal processing means comprises an audio and/or video signal processing means.

16. The processing system of claim 13, wherein said digital signal processing means comprises an instrumentation or sensing signal processing means.

17. The processing system of claim 13, wherein said digital signal processing means comprises an data translation or substitution means.

18. A method for controlling the data throughput of a digital signal processing system, comprising the steps of:
receiving data on a first data input of a first first-in-first-out (FIFO) buffer;
transferring data from said first FIFO buffer to a digital signal processing means as a function of control signals received from a source of control signals;
processing data transferred from said first FIFO buffer to said digital signal processing means as a function of control signals received from a source of control signals;
transferring processed data from said digital signal processing means to a second FIFO buffer as a function of control signals received from a source of control signals; and
outputing data from said second FIFO buffer as a function of control signals received from a source of control signals.

19. The method of claim 18, wherein said data receiving step further comprises the steps of:
outputing a first FIFO buffer empty indication;
outputing a first FIFO buffer not full indication;
receiving a first FIFO write indication, wherein said write indication enables said first FIFO buffer to input data on said first data input;
receiving data on said first data input of said first FIFO buffer;
storing data in said first FIFO;
outputing a first FIFO buffer not empty indication; and
outputing a first FIFO buffer full indication if said first FIFO completely fills with data.

20. The method of claim 18, wherein said data transfer step from said first FIFO buffer further comprises the steps of:
receiving a first FIFO buffer read indication, wherein said read indication enables said first FIFO buffer to output data on said first data output;
transferring data from said first FIFO buffer to said digital signal processing means; and
ceasing the transfer of data from said first FIFO buffer to said digital signal processor if said first FIFO does not receive a first FIFO buffer read indication.

21. The method of claim 18, wherein said data transferring step from said digital signal processing means further comprises the steps of:
outputing a second FIFO buffer empty indication;
outputing a second FIFO buffer not full indication;
receiving a second FIFO write indication, wherein said write indication enables said second FIFO buffer to input data in a second data input;
receiving data on said second data input of said second FIFO buffer;
storing data in said second FIFO;
outputing a second FIFO buffer not empty indication; and
outputing a second FIFO buffer full indication if said second FIFO buffer becomes completely full with data.

22. The method of claim 18, wherein said data outputing step further comprises the steps of:
receiving a second FIFO buffer read indication, wherein said read indication enables second FIFO buffer to transfer data to output data on said second data output;
transferring data from said second FIFO buffer on said second data output; and
ceasing the transfer of data from said second FIFO buffer if said second FIFO does not receive a second FIFO buffer read indication.
